# FASCICULE DE BREVET EUROPEEN

(11) **EP 3 227 167 B1**
(45) Date de publication et mention de la délivrance du brevet: **21.10.2020**
(21) Numéro de dépôt: 15801855.6
(22) Date de dépôt: 30.11.2015
(51) Int. Cl.: B62D 7/02, B62D 5/04, B60K 17/30, B60K 7/00

(54) **DISPOSITIF D'ENTRAÎNEMENT POUR CHARIOT OU ANALOGUE**
ANTRIEBSVORRICHTUNG FÜR SCHUBWAGEN ODER DERGLEICHEN
DRIVE DEVICE FOR A TROLLEY OR SIMILAR

(30) Priorité: 03.12.2014 FR 1461863
(43) Date de publication de la demande: 11.10.2017
(73) Titulaire: Moteurs Leroy-Somer, 16915 Angoulême Cedex 9 (FR)
(72) Inventeur: CALMETTES, Didier, 16400 Puymoyen (FR); COUPART, Eric, 16000 Angoulême (FR); SOURISSEAU, Françis, 16120 Châteauneuf (FR); PATO, Ago-Tchalim, 16600 Ruelle-sur-Touvre (FR)
(74) Mandataire: Nony
(86) Numéro de dépôt international: PCT/EP2015/078066
(87) Numéro de publication internationale: WO 2016/087375

(56) Documents cités:
- EP-A1- 1 857 317
- EP-A1- 1 870 314
- DE-A1- 19 904 552
- DE-U1-202005 020 631

## Description

La présente invention concerne un dispositif d'entraînement pour chariot de manutention ou analogue, notamment tout véhicule évoluant en milieu industriel ou de transport de marchandises.

Parmi les différents modes de motorisation des chariots de manutention, la roue motrice est le plus répandu.

Dans la majorité des cas, cette roue motrice est directionnelle, étant mobile en rotation autour d'un axe de giration vertical.

Le diamètre de giration de la roue doit être le plus réduit possible, en particulier lorsque la roue motrice n'est pas centrale, afin notamment de permettre d'écarter au maximum la distance entre les roues du chariot et d'accroître sa stabilité.

Dans les roues motrices connues, la roue est entraînée en rotation autour de son axe central au travers d'un réducteur par un premier moteur électrique de type à courant continu ou de type asynchrone qui, du fait de son encombrement, doit être disposé au-dessus de la roue si l'on veut satisfaire aux exigences des constructeurs de chariots. L'orientation de la roue autour de l'axe de giration vertical est effectuée au travers d'un réducteur par un deuxième moteur électrique de type à courant continu ou de type asynchrone. Le deuxième moteur électrique est déporté latéralement sur le châssis relativement à la roue et engrène avec une couronne reliée au support de la roue, pour orienter cette dernière selon l'axe de giration vertical.

Il en résulte un encombrement vertical assez important des deux moteurs électriques et une structure relativement complexe.

Il est connu de la demande de brevet FR 2 821 024 une roue de motrice, dont le premier moteur électrique est interne à la roue pour libérer un espace supplémentaire au dessus de celle-ci.

Il est connu de DE 199 04552 un entraînement de roue pour chariot transporteur pivotant autour d'un axe vertical et ayant un support de moyeu recevant un moyeu portant une roue motrice ainsi qu'un moteur électrique de roulement qui est un moteur à rotor en forme de disque.

Il existe un besoin pour perfectionner encore les dispositifs d'entraînement afin notamment de réduire encore leur encombrement et simplifier leur structure.

L'invention vise à répondre à ce besoin en proposant un dispositif d'entraînement pour chariot de manutention ou analogue, comportant,
- un châssis,
- un support de roue mobile relativement au châssis autour d'un axe de giration Z,
- une roue motrice portée par le support de roue, mobile relativement à celui-ci autour d'un axe de rotation X,
- un moteur de direction pour entraîner en rotation le support de roue relativement au châssis, ayant un rotor tournant autour d'un axe de rotation qui coïncide avec l'axe de giration Z.

Un tel dispositif d'entraînement s'avère compact et de construction simple et robuste.

Le gain de place réalisé au niveau du dispositif d'entraînement offre de nouvelles possibilités dans la conception du chariot.

La disposition du moteur de direction dans l'axe de giration Z permet notamment de faciliter le passage des câbles électriques d'alimentation des moteurs et de diminuer les risques d'arrachement de ces câbles.

De préférence, la roue motrice est réalisée conformément à l'enseignement de la demande de brevet FR 2 821 024, c'est-à-dire qu'elle comporte une roue et un moteur électrique d'entraînement de la roue qui peut être à aimants permanents. Un tel moteur électrique peut être disposé à l'intérieur de la roue et libérer la place au dessus de celle-ci.

De préférence, l'axe du rotor du moteur électrique d'entraînement de la roue est confondu avec l'axe de rotation X de celle-ci.

L'axe de giration Z du support de roue est, de préférence, perpendiculaire à l'axe de rotation X de la roue, notamment sécant à ce dernier.

Le dispositif peut comporter un roulement disposé entre le châssis et le support de roue pour permettre la rotation de ce dernier sur le châssis, le roulement étant fixe relativement au châssis ou au support de roue, de préférence au châssis.

Selon l'invention, le dispositif d'entraînement comporte un réducteur reliant le moteur de direction au support de roue. Le rapport de réduction peut être compris entre 10 et 1000, mieux entre 20 et 300.

Le réducteur comporte un train épicycloïdal.

Le train épicycloidal comporte un étage de réduction, comportant:
- un planétaire intérieur entraîné en rotation par l'arbre du moteur de direction,
- au moins un satellite entraîné en rotation autour d'un axe matériel par le planétaire intérieur, et
- un porte satellite sur lequel est monté en rotation le satellite,
- une couronne ou planétaire extérieur entourant le planétaire intérieur et le satellite.

Selon l'invention, l'arbre du moteur de direction est fixe relativement au planétaire intérieur, le support de roue étant fixe relativement à la couronne et le châssis étant fixe relativement au porte satellite.

Le train épicycloïdal peut comporter au moins deux satellites, mieux, au moins trois satellites répartis autour du planétaire intérieur.

L'extrémité de l'arbre du moteur de direction peut être usinée pour former le planétaire intérieur. Cela permet de réduire l'encombrement du moteur et de limiter le nombre de pièces du dispositif. En variante, l'arbre du moteur de giration est accouplé à un pignon rapporté, monté sur l'arbre, qui forme le planétaire intérieur.

Le porte satellite peut être fixe relativement au support de roue. Alors, le châssis est fixe relativement à la couronne. L'axe matériel précité est entraîné en rotation par le moteur de direction autour de l'axe de giration Z.

En variante, le support de roue est fixe relativement à la couronne. Alors, le châssis est fixe relativement au porte satellite, et ce dernier est fixe relativement à l'axe de giration Z. Le ou les satellites sont entraînés en rotation autour de leurs axes géométriques de rotation respectifs T et entraînent la couronne en rotation autour de l'axe de giration Z.

Le support de roue comporte, selon l'invention, une ouverture permettant de relier le porte satellite au châssis. Le porte satellite comporte au moins un roulement pour permettre la rotation du support de roue autour du porte satellite.

Selon un deuxième mode de réalisation, le train épicycloïdal peut comporter deux étages de réduction, notamment :
- un planétaire intérieur entraîné en rotation par l'arbre du moteur de direction,
- au moins un premier satellite engrenant avec le planétaire intérieur et entraîné en rotation autour d'un axe matériel de premier satellite,
- un porte satellite d'étage intermédiaire supportant le premier satellite et entraîné en rotation autour de l'axe de giration Z,
- au moins un deuxième satellite engrenant avec le porte satellite d'étage intermédiaire et entraîné en rotation autour d'un axe matériel de deuxième satellite,
- une couronne engrenant avec les premier et deuxième satellites.
l'un de l'axe de deuxième satellite et de la couronne étant fixe relativement au support de roue et l'autre de l'axe de deuxième satellite et de la couronne étant fixe relativement au châssis.

Le train épicycloïdal peut comporter plusieurs premiers satellites et plusieurs deuxièmes satellites.

Le train épicycloïdal peut comporter un porte satellite d'étage de sortie supportant le ou les axes matériels de deuxième satellite et entraîné en rotation autour de l'axe de giration Z.

Comme pour l'exemple précédent, l'extrémité de l'arbre du moteur de direction peut être usinée pour former le planétaire intérieur.

Le support de roue peut être fixe relativement à l'axe ou aux axes de deuxième satellite. Alors, le châssis est fixe relativement à la couronne.

En variante, le support de roue est fixe relativement à la couronne. Alors, le châssis est fixe relativement à l'axe ou aux axes de deuxième satellite. Le support de roue comporte, de préférence, une ouverture permettant de relier l'axe matériel de deuxième satellite, notamment le porte satellite d'étage de sortie au châssis.

L'invention pourra être mieux comprise à la lecture de la description détaillée qui va suivre, d'exemples de mise en œuvre non limitatifs de celle-ci, ainsi qu'à l'examen du dessin annexé, sur lequel :
- la figure 1 est une vue schématique en perspective et avec une coupe axiale partielle d'un dispositif d'entraînement selon l'invention,
- la figure 2 représente une vue partielle en coupe du dispositif de la figure 1, et
- la figure 3 est une vue analogue à la figure 2 d'une variante de dispositif.

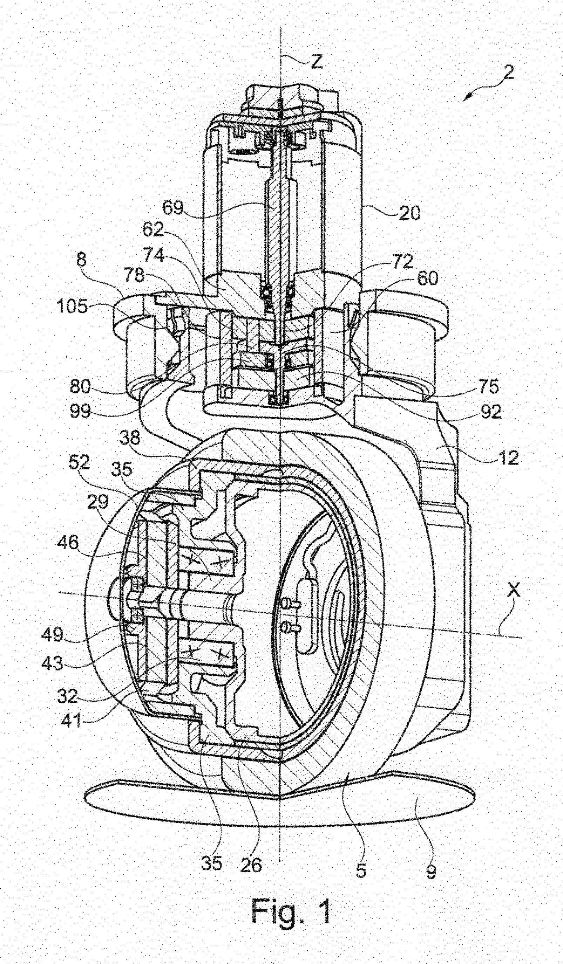

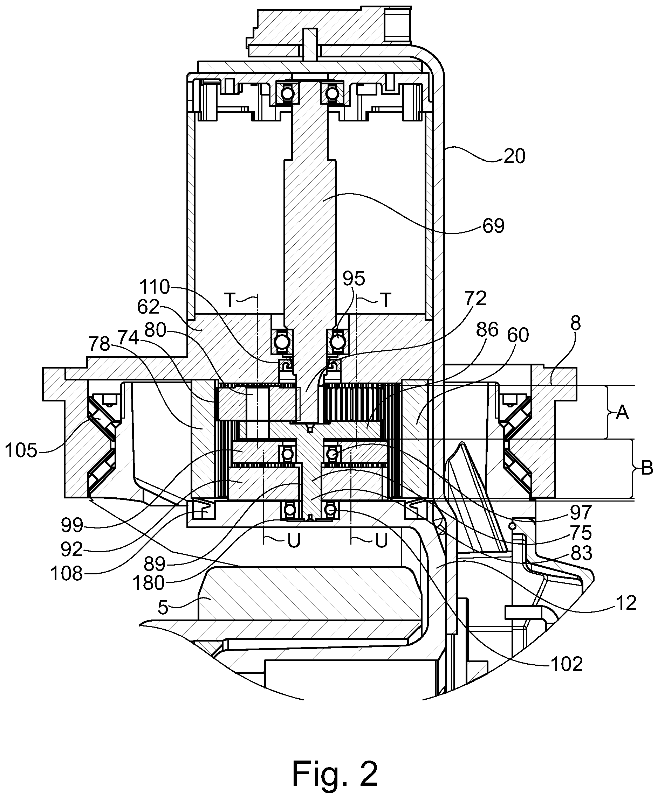

On a représenté sur les figures 1 et 2 un exemple de dispositif d'entraînement 2 selon l'invention, comportant une roue motrice 5 et un châssis 8 sur lequel est montée la roue 5 par l'intermédiaire d'un support de roue 12.

La roue 5 est mobile en rotation autour d'un axe géométrique de rotation X, normalement horizontal, permettant le déplacement de cette dernière sur une surface S.

Le support de roue 12 est mobile en rotation autour d'un axe géométrique de giration Z, normalement vertical, permettant l'orientation de la roue 5 sur la surface S.

Les axes géométriques X et Z sont préférentiellement perpendiculaires et sécants entre eux, comme illustré.

Le support de roue 12 porte la roue 5 tout en laissant cette dernière libre de tourner autour de l'axe X.

Le support de roue 12 est formé avec une partie tubulaire 29 d'axe X. La roue comporte un moyeu 35 qui tourne autour de la partie tubulaire 29 grâce à un roulement 32.

Une jante 38 est fixée sur le moyeu 35 par l'intermédiaire de vis 41.

La roue 5 est entraînée en rotation autour de l'axe géométrique X par un moteur électrique non représenté, notamment au travers un réducteur, de préférence à train épicycloïdal 43. Le moteur électrique est disposé à l'intérieur d'une partie tubulaire 26 de grand diamètre du support de roue 12. L'arbre du moteur électrique s'étend à l'intérieur de la partie tubulaire 29 selon l'axe X et il est accouplé par son extrémité au réducteur 43. Dans l'exemple illustré sur la figure 1, l'extrémité de l'arbre du moteur engrène avec des satellites 46, lesquels sont portés par un porte satellite 49 fixe relativement au support de roue 12.

La couronne 52 du train épicycloïdal est fixée au moyeu 35. De ce fait, la rotation de l'arbre du moteur électrique entraîne en rotation les satellites 46 qui entraînent la couronne 52 et donc la roue 5 autour de son axe géométrique de rotation X.

Le support de roue 12 est entraîné en rotation autour de l'axe géométrique Z par un moteur de direction 20 au travers d'un réducteur 60, notamment à train épicycloïdal.

Le moteur de direction 20 présente un carter 62 fixé au châssis 8.

Il peut être de tout type adapté, et comporte un rotor et un stator non illustrés.

Le train épicycloïdal 60 peut présenter un ou plusieurs étages de réduction. Dans l'exemple illustré sur les figures 1 et 2, le train épicycloïdal 60 présente deux étages de réduction A et B.

L'extrémité 72 de l'arbre du rotor est formée avec un engrenage constituant le planétaire intérieur du premier étage de réduction A, lequel comporte des premiers satellites 74 montés rotatif sur des axes matériels 80 s'étendant selon des axes géométriques de rotation T parallèles à l'axe de giration Z. Ces axes 80 sont supportés par un porte satellite d'étage intermédiaire 75. Les premiers satellites 74 engrènent d'un part avec l'extrémité 72 de l'arbre et d'autre part avec une couronne 78. Cette dernière est fixe relativement au châssis 8 et immobile relativement à l'axe Z de sorte que le porte satellite d'étage intermédiaire 75 est entraîné en rotation autour de ce dernier.

Comme on peut le voir plus particulièrement sur la figure 2, le porte satellite d'étage intermédiaire 75 comporte un arbre 83 selon l'axe Z relié rigidement par un plateau 86 aux axes matériels 80 des premiers satellites 74. L'arbre 83 du porte satellite 75 comporte à sa périphérie des dents 89 définissant le planétaire intérieur du deuxième étage de réduction B. Ce dernier comporte des deuxièmes satellites 92 montés rotatif sur des axes matériels, non visible sur les figures 1 et 2, tournant autour d'axes géométriques U parallèles à l'axe Z. Les deuxièmes satellites 92 engrènent d'un part avec l'engrenage 89 et d'autre part avec la couronne 78, immobile relativement à l'axe Z. Les axes des deuxièmes satellites 92 sont fixes relativement au support de roue 12. De ce fait, le porte satellite 75, en entrainant en rotation les deuxièmes satellites 92, provoque la rotation du support de roue 12 relativement à l'axe Z.

La rotation de l'arbre 69 entraîne ainsi en rotation le support de roue 12 et permet d'orienter la roue 5.

De préférence, le rapport de réduction du réducteur 60 est compris entre 10 et 1000, mieux entre 20 et 300.

Le planétaire intérieur est, de préférence, formé directement sur l'arbre 69. En variante, le planétaire intérieur est une pièce rapportée sur l'arbre 69.

De même, les dents 89 du porte satellite 75 sont, de préférence, formées directement sur l'arbre de ce dernier. En variante, le planétaire intérieur du deuxième étage de réduction B est une pièce rapportée sur l'arbre 83 du porte satellite 75.

Un roulement 95 est, de préférence, disposé entre l'arbre 69 du rotor et le carter 62 du moteur 20.

Un autre roulement 97 peut être disposé entre l'axe central 83 du porte satellite 75 et un support 99 du plateau 86 du porte satellite 75.

L'axe central 82 du porte satellite 75 peut s'étendre jusque dans un logement 100 du support de roue 12 et un roulement 102 peut être disposé dans ce logement 100 entre l'extrémité de l'axe central 83 et le support de roue 12.

Un roulement 105 peut également être disposé entre le support de roue 12 et le châssis 8.

Un joint d'étanchéité 108 peut être disposé entre le support de roue 12 et la couronne 78, et un joint d'étanchéité 110 entre l'arbre 69 du rotor et le carter 62.

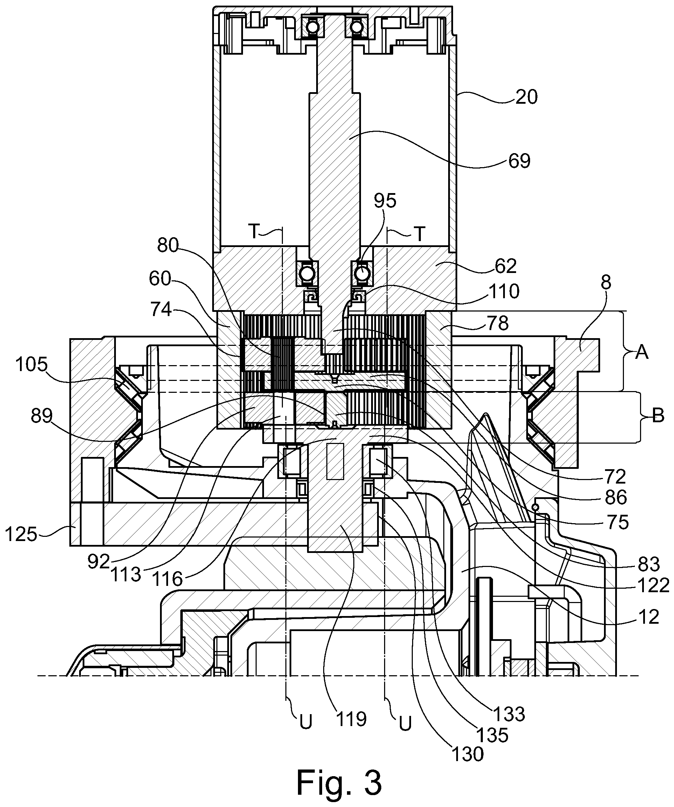

L'exemple illustré sur la figure 3 diffère de celui des figures 1 et 2 en ce que la couronne 74 est fixe relativement au support de roue 12 et que les axes matériels 113 des deuxièmes satellites 92 sont fixes relativement au châssis 8.

Les axes matériels 113 des deuxièmes satellites 92 sont supportés par un porte satellite d'étage de sortie116. Ce dernier comporte un arbre 119 s'étendant selon l'axe Z et relié par un plateau 122 aux axes matériels 113 des deuxièmes satellites 92. L'arbre 119 traverse une ouverture 130 du support de roue 12 et il est fixé par un bras de liaison 125 au châssis 8. De préférence, un roulement 133 et un joint d'étanchéité 135 sont disposés entre le support de roue 12 et l'arbre 119.

Ainsi, lors de l'actionnement du moteur, l'arbre 69 entraîne en rotation les premiers satellites 74 autour de leur axes géométriques de rotation T et les axes matériels 80 des premiers satellites 74 pivotent autour de l'axe Z avec le porte satellite d'étage intermédiaire 75. Ce dernier entraîne en rotation par les dents 89 les deuxièmes satellites 92. Les axes matériels 113 de ces derniers étant fixes relativement à l'axe Z, la couronne 78 est entraînée en rotation autour de l'axe Z avec le support de roue 12, ce qui permet d'orienter la roue 5.

Le nombre de premiers et deuxièmes satellites peut être supérieur à 2, de préférence égal à 3.

L'invention n'est pas limitée aux exemples qui viennent d'être décrits.

Notamment, le dispositif d'entraînement peut comporter trois étages de réduction.

L'expression « comportant un » est synonyme de « comprenant au moins un » sauf lorsque le contraire est spécifié.

## Revendications

1. Dispositif d'entraînement (2) pour chariot de manutention ou analogue, comportant,
- un châssis (8),
- un support de roue (12) mobile relativement au châssis (8) autour d'un axe de giration Z,
- une roue motrice (5) portée par le support de roue (12), mobile relativement à celui-ci autour d'un axe de rotation X,
- un moteur de direction (20) pour entraîner en rotation le support de roue (12) relativement au châssis (8), ayant un rotor tournant autour d'un axe de rotation qui coïncide avec l'axe de giration Z,
- un réducteur reliant le moteur de direction (20) au support de roue (12), le réducteur comportant un train épicycloïdal (60) comportant :
∘ un planétaire intérieur (72) entraîné en rotation par l'arbre du moteur de direction,
∘ au moins un satellite (92) entraîné en rotation autour d'un axe matériel (113) par le planétaire intérieur (72), et
∘ un porte satellite (116) sur lequel est monté le satellite (92),
∘ une couronne (78) entourant le planétaire intérieur (72) et le satellite (92),
l'arbre (69) du moteur de direction (20) étant fixe relativement au planétaire intérieur (72),
le dispositif étant **caractérisé en ce que** le support de roue (12) est fixe relativement à la couronne (78) et le châssis (8) étant fixe relativement au porte satellite (116), le support de roue (12) comportant une ouverture (130) permettant de relier le porte satellite (116) au châssis (8), le porte satellite (116) comportant au moins un roulement (133) pour permettre la rotation du support de roue (12) autour du porte satellite (116).

2. Dispositif d'entraînement selon la revendication 1, l'axe de giration Z du support de roue (12) étant perpendiculaire à l'axe X de rotation de la roue (5).

3. Dispositif d'entraînement selon la revendication 1 ou 2, l'axe de giration Z du support de roue (12) étant sécant de l'axe X de rotation de la roue (5).

4. Dispositif d'entraînement selon la revendication 1, le train épicycloïdal comportant au moins deux satellites (74), mieux, au moins trois satellites (74) répartis autour du planétaire intérieur (72).

5. Dispositif d'entraînement selon la revendication 1 ou 2, l'extrémité de l'arbre (69) du moteur de direction (20) étant usiné pour former le planétaire intérieur (72).

6. Dispositif d'entraînement selon l'une quelconque des revendications 1 à 5, le support de roue (12) étant fixe relativement au porte satellite (116).

7. Dispositif d'entraînement selon l'une quelconque des revendications 1 à 6, le train épicycloïdal étant à deux étages de réduction et comportant :
- un planétaire intérieur (72) entraîné en rotation par l'arbre (69) du moteur de direction (20),
- au moins un premier satellite (74) engrenant avec le planétaire intérieur (72) et entraîné en rotation autour d'un axe matériel de premier satellite (80),
- un porte satellite d'étage intermédiaire (75) supportant le premier satellite (74) et entraîné en rotation autour de l'axe de giration Z,
- au moins un deuxième satellite (92) engrenant avec le porte satellite d'étage intermédiaire (75) et entraîné en rotation autour d'un axe matériel de deuxième satellite (113),
- une couronne (78) engrenant avec les premier et deuxième satellites (74, 92).
l'un de l'axe de deuxième satellite (113) et de la couronne (78) étant fixe relativement au support de roue (12) et l'autre de l'axe de deuxième satellite (113) ou de la couronne (78) étant fixe relativement au châssis (8).

8. Dispositif d'entraînement selon la revendication 7, le train épicycloïdal (60) comportant plusieurs premiers satellites (74) et plusieurs deuxièmes satellites (92).

9. Dispositif d'entraînement selon la revendication 7 ou 8, dans lequel le train épicycloïdal (60) comporte un porte satellite d'étage de sortie (119) supportant le ou les axes matériels de deuxième satellite (113) et entraîné en rotation autour de l'axe de giration Z.

10. Dispositif d'entraînement selon l'une quelconque des revendications 7 à 9, dans lequel l'extrémité de l'arbre (69) du moteur de direction (20) est usinée pour former le planétaire intérieur (72).

11. Dispositif d'entraînement selon l'une quelconque des revendications 7 à 10, le support de roue (12) étant fixe relativement à l'axe ou aux axes de deuxième satellite (113).

12. Dispositif d'entraînement selon l'une quelconque des revendications 7 à 10, le support de roue (12) étant fixe relativement à la couronne (78).

13. Dispositif d'entraînement selon la revendication 12 et la revendication 10, le support de roue (12) comportant une ouverture (130) permettant de relier le porte satellite d'étage de sortie (119) au châssis (8).

14. Dispositif d'entraînement selon l'une quelconque des revendications précédentes, comportant un roulement (105) disposé entre le châssis (8) et le support de roue (12) pour permettre la rotation de ce dernier sur le châssis (8), le roulement (105) étant fixe relativement au châssis (8) ou au support de roue (12).

## Patentansprüche

1. Antriebsvorrichtung (2) für ein Flurförderzeug oder Ähnliches, umfassend,
- einen Rahmen (8),
- einen Radträger (12), der relativ zum Rahmen (8) um eine Drehachse Z beweglich ist,
- ein Treibrad (5), das vom Radträger (12) getragen wird und relativ zu diesem um eine Rotationsachse X beweglich ist,
- einen Lenkmotor (20), um den Radträger (12) relativ zum Rahmen (8) drehanzutreiben, mit einem Läufer, der um eine Rotationsachse dreht, die mit der Drehachse Z zusammenfällt,
- ein Getriebe, das den Lenkmotor (20) mit dem Radträger (12) verbindet, wobei das Getriebe ein Planetengetriebe (60) umfasst, welches umfasst:
∘ ein Sonnenrad (72), das von der Welle des Lenkmotors drehangetrieben wird,
∘ mindestens ein Planetenrad (92), das vom Sonnenrad (72) um eine materielle Achse (113) drehangetrieben wird, und
∘ einen Planetenträger (116), auf dem das Planetenrad (92) gelagert ist,
∘ ein Hohlrad (78), welches das Sonnenrad (72) und das Planetenrad (92) umgibt,
wobei die Welle (69) des Lenkmotors (20) relativ zum Sonnenrad (72) feststehend ist,
wobei die Vorrichtung **dadurch gekennzeichnet ist, dass** der Radträger (12) relativ zum Hohlrad (78) feststehend ist und der Rahmen (8) relativ zum Planetenträger (116) feststehend ist, wobei der Radträger (12) eine Öffnung (130) umfasst, die es ermöglicht, den Planetenträger (116) mit dem Rahmen (8) zu verbinden, wobei der Planetenträger (116) mindestens ein Wälzlager (133) umfasst, um die Rotation des Radträgers (12) um den Planetenträger (116) zu ermöglichen.

2. Antriebsvorrichtung nach Anspruch 1, wobei die Drehachse Z des Radträgers (12) senkrecht zur Rotationsachse X des Rades (5) verläuft.

3. Antriebsvorrichtung nach Anspruch 1 oder 2, wobei die Drehachse Z des Radträgers (12) die Rotationsachse X des Rades (5) schneidet.

4. Antriebsvorrichtung nach Anspruch 1, wobei das Planetengetriebe mindestens zwei Planetenräder (74), besser mindestens drei Planetenräder (74) umfasst, die um das Sonnenrad (72) verteilt sind.

5. Antriebsvorrichtung nach Anspruch 1 oder 2, wobei das Ende der Welle (69) des Lenkmotors (20) bearbeitet ist, um das Sonnenrad (72) zu bilden.

6. Antriebsvorrichtung nach einem der Ansprüche 1 bis 5, wobei der Radträger (12) relativ zum Planetenträger (116) feststehend ist.

7. Antriebsvorrichtung nach einem der Ansprüche 1 bis 6, wobei das Planetengetriebe mit zwei Untersetzungsstufen ausgeführt ist und umfasst:
- ein Sonnenrad (72), das von der Welle (69) des Lenkmotors (20) drehangetrieben wird,
- mindestens ein erstes Planetenrad (74), das mit dem Sonnenrad (72) kämmt und um eine materielle Achse des ersten Planetenrades (80) drehantrieben wird,
- einen Zwischenstufen-Planetenträger (75), der das erste Planetenrad (74) trägt und um die Drehachse Z drehangetrieben wird,
- mindestens ein zweites Planetenrad (92), das mit dem Zwischenstufen-Planetenträger (75) kämmt und um eine materielle Achse des zweiten Planetenrades (113) drehantrieben wird,
- ein Hohlrad (78), das mit den ersten und zweiten Planetenrädern (74, 92) kämmt,
wobei eine der Achsen des zweiten Planetenrades (113) und des Hohlrades (78) relativ zum Radträger (12) feststehend ist und die andere der Achsen des zweiten Planetenrades (113) oder des Hohlrades (78) relativ zum Rahmen (8) feststehend ist.

8. Antriebsvorrichtung nach Anspruch 7, wobei das Planetengetriebe (60) mehrere erste Planetenräder (74) und mehrere zweite Planetenräder (92) umfasst.

9. Antriebsvorrichtung nach Anspruch 7 oder 8, wobei das Planetengetriebe (60) einen Ausgangstufen-Planetenträger (119) umfasst, der die materielle(n) Achse(n) des zweiten Planetenrades (113) trägt und um die Drehachse Z drehangetrieben wird.

10. Antriebsvorrichtung nach einem nach einem der Ansprüche 7 bis 9, wobei das Ende der Welle (69) des Lenkmotors (20) bearbeitet ist, um das Sonnenrad (72) zu bilden.

11. Antriebsvorrichtung nach einem der Ansprüche 7 bis 10, wobei der Radträger (12) relativ zu der Achse oder den Achsen des zweiten Planetenrades (113) feststehend ist.

12. Antriebsvorrichtung nach einem der Ansprüche 7 bis 10, wobei der Radträger (12) relativ zum Hohlrad (78) feststehend ist.

13. Antriebsvorrichtung nach Anspruch 12 und Anspruch 10, wobei der Radträger (12) eine Öffnung (130) umfasst, die es ermöglicht, den Ausgangsstufen-Planetenträger (119) mit dem Rahmen (8) zu verbinden.

14. Antriebsvorrichtung nach einem der vorhergehenden Ansprüche, umfassend ein Wälzlager (105), das zwischen dem Rahmen (8) und dem Radträger (12) angeordnet ist, um dessen Rotation am Rahmen (8) zu ermöglichen, wobei das Wälzlager (105) relativ zum Rahmen (8) oder zum Radträger (12) feststehend ist.

## Claims

1. A drive device (2) for a handling trolley or similar, including
- a frame (8),
- a wheel support (12) movable relative to the frame (8) about a turning axis Z,
- a driving wheel (5) carried by the wheel support (12), and movable relative to the wheel support about an axis of rotation X,
- a steering motor (20) for rotating the wheel support (12) relative to the frame (8), having a rotor rotating about an axis of rotation which is coincident with the turning axis Z,
- a reduction gear connecting the steering motor (20) to the wheel support (12), the reduction gear including an epicyclic train (60) including:
∘ an inner sun gear (72) rotated by the shaft of the steering motor,
∘ at least one planet gear (92) rotated about a physical axle (113) by the inner sun gear (72), and
∘ a planet gear carrier (116) on which the planet gear (92) is rotatably mounted,
∘ a ring gear (78) surrounding the inner sun gear (72) and the planet gear (92),
the shaft (69) of the steering motor (20) being fixed relative to the inner sun gear (72), the device being **characterized in that** the wheel support (12) is fixed relative to the ring gear (78) and the frame (8) is fixed relative to the planet gear carrier (116), the wheel support (12) including an opening (130) for connecting the planet gear carrier (116) to the frame (8), the wheel support (12) comprising at least one bearing (133) to allow the rotation of the wheel support (12) about the planet gear carrier (116).

2. The drive device as claimed in claim 1, the turning axis Z of the wheel support (12) being perpendicular to the axis of rotation X of the wheel (5).

3. The drive device as claimed in claim 1 or 2, the turning axis Z of the wheel support (12) intersecting the axis of rotation X of the wheel (5).

4. The drive device as claimed in claim 1, the epicyclic train including at least two planet gears (74), more preferably at least three planet gears (74) spread about the inner sun gear (72).

5. The drive device as claimed in claim 1 or 2, the end of the shaft (69) of the steering motor (20) being machined to form the inner sun gear (72).

6. The drive device as claimed in any one of claims 1-5, the wheel support (12) being fixed relative to the planet gear carrier (116).

7. The drive device as claimed in any one of claims 1-9, the epicyclic train having two reduction stages and including:
- an inner sun gear (72) rotated by the shaft (69) of the steering motor (20),
- at least a first planet gear (74) meshing with the inner sun gear (72) and rotated about a first planet gear (80) physical axle,
- an intermediate stage planet gear carrier (75) supporting the first planet gear (74) and rotated about the turning axis Z,
- at least a second planet gear (92) meshing with the intermediate stage planet gear carrier (75) and rotated about a second planet gear physical axle (113),
- a ring gear (78) meshing with the first and second planet gears (74, 92),
one element from the second planet gear axle (113) and from the ring gear (78) being fixed relative to the wheel support (12) and the other element from the second planet gear axle (113) or from the ring gear (78) being fixed relative to the frame (8).

8. The drive device as claimed in claim 10, the epicyclic train (60) including several first planet gears (74) and several second planet gears (92).

9. The drive device as claimed in claim 10 or 11, wherein the epicyclic train (60) includes an output stage planet gear carrier (119) supporting the second planet gear physical axle or axles (113) and rotated about the turning axis Z.

10. The drive device as claimed in any one of claims 10-12, wherein the end of the shaft (69) of the steering motor (20) is machined to form the inner sun gear (72).

11. The drive device as claimed in any one of claims 10-13, the wheel support (12) being fixed relative to the second planet gear axle or axles (113).

12. The drive device as claimed in any one of claims 10-13, the wheel support (12) being fixed relative to the ring gear (78).

13. The drive device as claimed in claim 15 and claim 13, the wheel support (12) including an opening (130) for connecting the output stage planet gear carrier (119) to the frame (8).

14. The drive device as claimed in any one of the preceding claims, including a bearing (105) arranged between the frame (8) and the wheel support (12) to allow the rotation of the latter on the frame (8), the bearing (105) being fixed relative to the frame (8) or to the wheel support (12).
